# EUROPEAN PATENT APPLICATION

(11) **EP 4 134 520 A2**
(43) Date of publication of application: **15.02.2023**
(21) Application number: 22190420.4
(22) Date of filing: 15.08.2022
(51) Int. Cl.: F01D 5/28, F01D 5/18

(54) **FORMING COOLING APERTURE(S) IN A TURBINE ENGINE COMPONENT**

(30) Priority: 13.08.2021 US 202117401886
(71) Applicant: Raytheon Technologies Corporation, Farmington, CT 06032 (US)
(72) Inventor: CRAIG, Brian, Palm Beach Gardens, 33410 (US); KOONANKEIL, James M., Marlborough, 06447 (US); HAZEL, Brian T., Avon, 06001 (US); DENNEY, Paul E., Northborough, 01532 (US); MONGILLO, Dominic J., West Hartford, 06107 (US)
(74) Representative: Dehns

(57) **Abstract**

A manufacturing method is provided. During this method, a preform component (60') for a turbine engine is provided. This preform component (60') includes a substrate (74) and an outer coating (78) on the substrate. A cooling aperture (64) is formed in the preform component (60'). The cooling aperture (64) includes a diffuser section (104) and a meter section (102). The diffuser section (104) extends through the outer coating (78) and into the substrate (74). The meter section (102) extends within the substrate (74). The forming of the cooling aperture (64) includes: forming the diffuser section (104) using a first machining process; and forming the meter section (102) using a second machining process that is different than the first machining process.

## Description

### BACKGROUND OF THE DISCLOSURE

### TECHNICAL FIELD

This disclosure (invention) relates generally to a turbine engine and, more particularly, to cooling apertures and formation thereof in a component of the turbine engine.

### BACKGROUND INFORMATION

A gas turbine engine includes various fluid cooled components such as turbine blades and turbine vanes. Such fluid cooled components may include one or more cooling apertures extending through a sidewall of the respective component. Various methods are known in the art for forming cooling apertures. While these known cooling aperture formation methods have various benefits, there is still room in the art form improvement.

### SUMMARY OF THE DISCLOSURE

According to an aspect of the present invention, a manufacturing method is provided. During this method, a preform component for a turbine engine is provided. This preform component includes a substrate and an outer coating on the substrate. A cooling aperture is formed in the preform component. The cooling aperture includes a diffuser section and a meter section. The diffuser section extends through the outer coating and into the substrate. The meter section extends within the substrate. The forming of the cooling aperture includes: forming the diffuser section using a first machining process; and forming the meter section using a second machining process that is different than the first machining process.

According to another aspect of the present invention, a manufacturing method is provided. During this method, a preform component for a turbine engine is provided. This preform component includes a substrate and an outer coating on the substrate. The substrate is configured from or otherwise includes electrically conductive material. The outer coating is configured from or otherwise includes non-electrically conductive material. A cooling aperture is formed in the preform component. The cooling aperture includes a diffuser section and a meter section. The diffuser section extends through the outer coating and into the substrate. The meter section extends within the substrate. The forming of the cooling aperture includes: forming the diffuser section using a first machining process; and forming the meter section using a second machining process that is different than the first machining process.

According to another aspect of the present invention, another manufacturing method is provided. During this method, a substrate is provided. A coating is applied over the substrate to provide a preform component for a turbine engine. A diffuser section of a cooling aperture is formed in the preform component using a first machining process. The diffuser section extends through the coating and into the substrate. A meter section of the cooling aperture is formed in the preform component using a second machining process that is different than the first machining process. The meter section extends within the substrate to the diffuser section.

According to still another aspect of the present invention, another manufacturing method is provided. During this method, a substrate is provided that is configured from or otherwise includes metal. A coating is applied over the substrate to provide a preform component for a turbine engine. A first section of a cooling aperture is formed in the preform component using a laser machining process. The first section extends through the coating and into the substrate. A second section of the cooling aperture is formed in the preform component using an electrical discharge machining process. The second section extends within the substrate.

The following optional features may be applied to any of the above aspects.

The first machining process may be or include a laser machining process. The second machining process may be or include an electrical discharge machining process.

The substrate may be configured from metal. The coating may be configured from ceramic.

The first machining process may be or include a laser machining process.

The first machining process may be or include a water-jet guided laser machining process.

The first machining process may be or include an abrasive water jet machining process.

The second machining process may be or include an electrical discharge machining process.

The providing of the preform component may include: providing the substrate; and applying the outer coating over the substrate.

The preform component may also include an inner coating between the substrate and the outer coating. The diffuser section may also extend through the inner coating.

The inner coating may be configured from or otherwise include electrically conductive material that is different than the electrically conductive material of the substrate.

The cooling aperture may extend through the substrate and the outer coating along a centerline. The diffuser section may have a cross-sectional geometry that changes as the cooling aperture extends along the centerline.

The cooling aperture may extend through the substrate and the outer coating along a centerline. The meter section may have a cross-sectional geometry that is uniform as the cooling aperture extends along the centerline.

The diffuser section may be configured as a single lobed diffuser section.

The diffuser section may be configured as a multi-lobed diffuser section.

The preform component may be configured as or otherwise include a preform of an airfoil for the turbine engine.

The preform component may be configured as or otherwise include a preform of a flowpath wall for the turbine engine.

The electrical conduct material may be or otherwise include metal.

The non-electrically conductive material may be or otherwise include ceramic.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a side cutaway illustration of a geared turbofan turbine engine.
FIG. 2 is a perspective illustration of a portion of a fluid cooled component.
FIG. 3 is a sectional illustration of a portion of the fluid cooled component taken along a centerline of a cooling aperture.
FIG. 4 is a side illustration of a portion of the fluid cooled component and the cooling aperture.
FIGS. 5 and 6 are side illustrations of portions of the fluid cooled component configured with various multi-lobed cooling apertures.
FIG. 7 is a flow diagram of a method for manufacturing a fluid cooled component.
FIG. 8 is a sectional illustration of a portion of a preform substrate.
FIG. 9 is a sectional illustration of a portion of the preform substrate and a preform inner coating.
FIG. 10 is a sectional illustration of a portion of the preform substrate, the preform inner coating and a preform outer coating.
FIG. 11 is a sectional illustration of a portion of a preform component following machining of a cooling aperture diffuser section.
FIG. 12 is a sectional illustration of a portion of the preform component following machining of a cooling aperture meter section.

### DETAILED DESCRIPTION

The present disclosure includes methods for manufacturing fluid cooled components of a gas turbine engine. For ease of description, the turbine engine may be described below as a turbofan turbine engine. The present disclosure, however, is not limited to such an exemplary gas turbine engine. The turbine engine, for example, may alternatively be configured as a turbojet turbine engine, a turboprop turbine engine, a turboshaft turbine engine, a propfan turbine engine, a pusher fan turbine engine or an auxiliary power unit (APU) turbine engine. The turbine engine may be configured as a geared turbine engine or a direct drive turbine engine. The present disclosure is also not limited to aircraft applications. The turbine engine, for example, may alternatively be configured as a ground-based industrial turbine engine for power generation, or any other type of turbine engine which utilizes fluid cooled components.

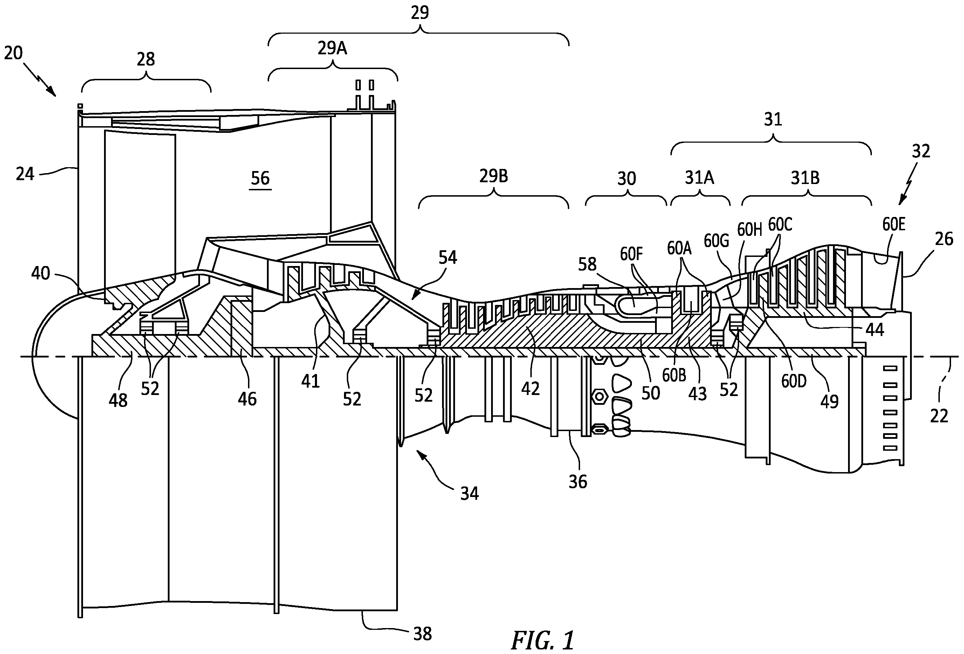

FIG. 1 is a side cutaway illustration of the turbofan turbine engine 20. This turbine engine 20 extends along an axial centerline 22 between a forward, upstream airflow inlet 24 and an aft, downstream airflow exhaust 26. The turbine engine 20 includes a fan section 28, a compressor section 29, a combustor section 30, a turbine section 31 and an exhaust section 32 (partially shown in FIG. 1). The compressor section 29 includes a low pressure compressor (LPC) section 29A and a high pressure compressor (HPC) section 29B. The turbine section 31 includes a high pressure turbine (HPT) section 31A and a low pressure turbine (LPT) section 31B.

The engine sections 28-31 are arranged sequentially along the axial centerline 22 within an engine housing 34. This engine housing 34 includes an inner case 36 (e.g., a core case) and an outer case 38 (e.g., a fan case). The inner case 36 may house one or more of the engine sections 29A-31B; e.g., an engine core. The outer case 38 may house at least the fan section 28.

Each of the engine sections 28, 29A, 29B, 31A and 31B includes a respective rotor 40-44. Each of these rotors 40-44 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The fan rotor 40 is connected to a gear train 46, for example, through a fan shaft 48. The gear train 46 and the LPC rotor 41 are connected to and driven by the LPT rotor 44 through a low speed shaft 49. The HPC rotor 42 is connected to and driven by the HPT rotor 43 through a high speed shaft 50. The shafts 48-50 are rotatably supported by a plurality of bearings 52; e.g., rolling element and/or thrust bearings. Each of these bearings 52 is connected to the engine housing 34 by at least one stationary structure such as, for example, an annular support strut.

During operation, air enters the turbine engine 20 through the airflow inlet 24. This air is directed through the fan section 28 and into a core flowpath 54 and a bypass flowpath 56. The core flowpath 54 extends sequentially through the engine sections 29A-32. The air within the core flowpath 54 may be referred to as "core air". The bypass flowpath 56 extends through a bypass duct, which bypasses the engine core. The air within the bypass flowpath 56 may be referred to as "bypass air".

The core air is compressed by the LPC rotor 41 and the HPC rotor 42 and directed into a combustion chamber 58 of a combustor in the combustor section 30. Fuel is injected into the combustion chamber 58 and mixed with the compressed core air to provide a fuel-air mixture. This fuel air mixture is ignited and combustion products thereof flow through and sequentially cause the HPT rotor 43 and the LPT rotor 44 to rotate. The rotation of the HPT rotor 43 and the LPT rotor 44 respectively drive rotation of the HPC rotor 42 and the LPC rotor 41 and, thus, compression of the air received from a core airflow inlet. The rotation of the LPT rotor 44 also drives rotation of the fan rotor 40, which propels bypass air through and out of the bypass flowpath 56. The propulsion of the bypass air may account for a majority of thrust generated by the turbine engine 20, e.g., more than seventy-five percent (75%) of engine thrust. The turbine engine 20 of the present disclosure, however, is not limited to the foregoing exemplary thrust ratio.

The turbine engine 20 includes a plurality of fluid cooled components (e.g., 60AH; generally referred to as "60") arranged within, for example, the combustor section 30, the turbine section 31 and/or the exhaust section 32. Examples of these fluid cooled components 60 include airfoils such as, but not limited to, a rotor blade airfoil (e.g., 60A, 60D) and a stator vane airfoil (e.g., 60B, 60C, 60H). Other examples of the fluid cooled components 60 include flowpath walls such as, but not limited to, a combustor wall (e.g., 60F), an exhaust duct wall (e.g., 60E), a shroud or other flowpath wall (e.g., 60G), a rotor blade platform and a stator vane platform. Of course, various other fluid cooled components may be included in the turbine engine 20, and the present disclosure is not limited to any particular types or configurations thereof.

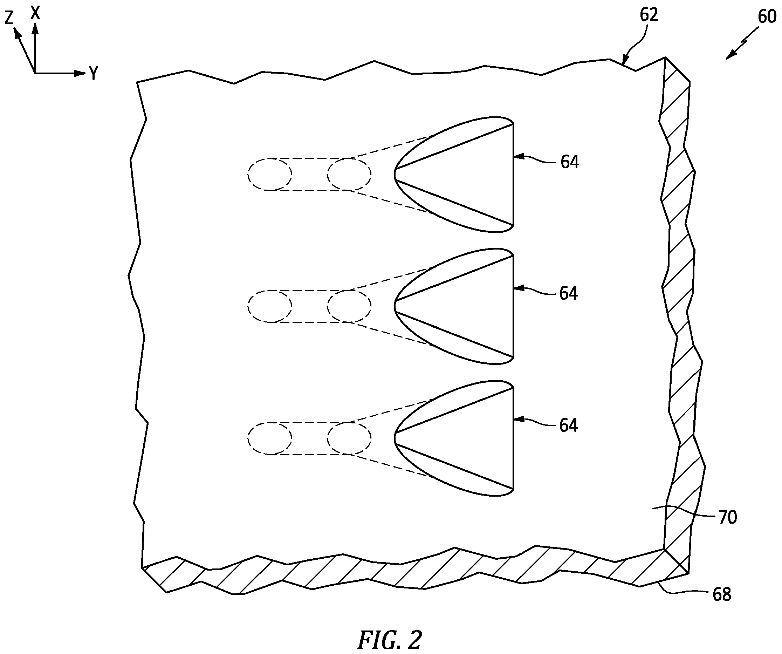

FIG. 2 illustrates a portion of one of the fluid cooled components 60 within the turbine engine 20. This fluid cooled component 60 has a component wall 62 (e.g., a sidewall or an endwall) configured with one or more cooling apertures 64.

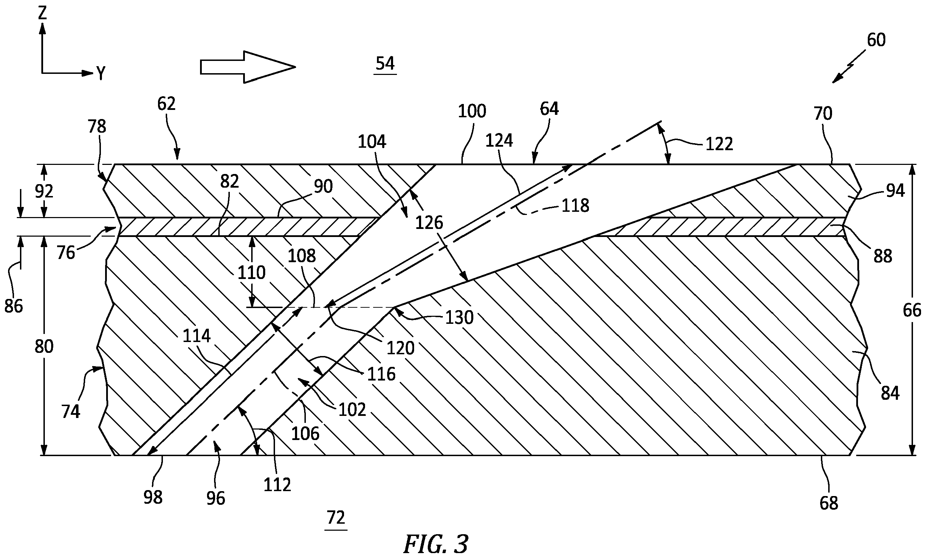

Referring to FIG. 3, the component wall 62 has a thickness 66 that extends vertically (e.g., along a z-axis) between and to a first surface 68 and a second surface 70. The component first surface 68 may be configured as an interior and/or a cold side surface of the component wall 62. The component first surface 68, for example, may at least partially form a peripheral boundary of a cooling fluid volume 72 (e.g., a cavity or a passage) along the component wall 62. The component first surface 68 may thereby be subject to relatively cool fluid (e.g., cooling air) supplied to the cooling fluid volume 72. This cooling fluid volume 72 may be an internal volume formed within the fluid cooled component 60 where, for example, the component is an airfoil. Alternatively, the cooling fluid volume 72 may be an external volume formed external to the fluid cooled component 60 where, for example, the component is a flowpath wall. The component second surface 70 may be configured as an exterior and/or a hot side surface of the component wall 62. The component second surface 70, for example, may at least partially form a peripheral boundary of a portion of, for example, the core flowpath 54 along the component wall 62. The component second surface 70 may thereby be subject to relative hot fluid (e.g., combustion products) flowing through the core flowpath 54 within, for example, one of the engine sections 30-32 of FIG. 1.

The component wall 62 of FIG. 3 includes a component substrate 74 and one or more external component coatings 76 and 78. The component substrate 74 at least partially or completely forms and carries the component first surface 68. The component substrate 74 has a thickness 80 that extends vertically (e.g., along the z-axis) between and to the component first surface 68 and a second surface 82 of the component substrate 74. This substrate second surface 82 may be configured as an exterior surface of the component substrate 74 prior to being (e.g., partially or completely) covered by the one or more component coatings 76 and 78. The substrate thickness 80, for example, may be greater than one-half (1/2) of the wall thickness 66. The substrate thickness 80, for example, may be between two-third (2/3) and four-fifths (4/5) of the wall thickness 66.

The component substrate 74 is constructed from substrate material 84. This substrate material 84 may be an electrically conductive material. The substrate material 84, for example, may be or otherwise include metal. Examples of the metal include, but are not limited to, nickel (Ni), titanium (Ti), aluminum (Al), chromium (Cr), cobalt (Co), and alloys thereof. The metal, for example, may be a nickel or cobalt based superalloy such as, but not limited to, PWA 1484 or PWA 1429.

The inner coating 76 may be configured as a bond coating between the component substrate 74 and the outer coating 78. The inner coating 76 of FIG. 3 is bonded (e.g., directly) to the substrate second surface 82. The inner coating 76 at least partially or completely covers the substrate second surface 82 (e.g., along an x-y plane of FIG. 2). The inner coating 76 has a thickness 86 that extends vertically (e.g., along the z-axis) between and to component substrate 74 and the outer coating 78. This inner coating thickness 86 may be less than one-seventh (1/7) of the wall thickness 66. The inner coating thickness 86, for example, may be between one-eighth (1/8) and one-fortieth (1/40) of the wall thickness 66.

The inner coating 76 is constructed from inner coating material 88. This inner coating material 88 may be an electrically conductive material. The inner coating material 88, for example, may be or otherwise include metal. Examples of the metal include, but are not limited to, MCrAlY and MAlCrX, where "M" is nickel (Ni), cobalt (Co), iron (Fe) or any combination thereof, and where "Y" or "X" is hafnium (Hf), yttrium (Y), silicon (Si) or any combination thereof. The MCrAlY and MAlCrX may be further modified with strengthening elements such as, but not limited to, tantalum (Ta), rhenium (Re), tungsten (W), molybdenum (Mo) or any combination thereof. An example of the MCrAlY is PWA 286.

The inner coating 76 may be formed from a single layer of the inner coating material 88. The inner coating 76 may alternatively be formed from a plurality of layers of the inner coating material 88, where the inner coating material 88 within each of those inner coating layers may be the same as one another or different from one another.

The outer coating 78 may be configured as a protective coating for the component substrate 74 and, more generally, the fluid cooled component 60. The outer coating 78, for example, may be configured as a thermal barrier layer and/or an environmental layer. The outer coating 78 at least partially or completely forms and carries the component second surface 70. The outer coating 78 of FIG. 2 is bonded (e.g., directly) to a second (e.g., exterior) surface 90 of the inner coating 76. The outer coating 78 at least partially or completely covers the inner coating second surface 90 as well as the underlying substrate second surface 82 (e.g., along an x-y plane of FIG. 2). The outer coating 78 has a thickness 92 that extends vertically (e.g., along the z-axis) between and to the inner coating 76 and the component second surface 70. This outer coating thickness 92 may be less than one-half (1/2) of the wall thickness 66. The outer coating thickness 92, for example, may be between one-third (1/3) and one-eighth (1/8) of the wall thickness 66. The outer coating thickness 92, however, may be greater than the inner coating thickness 86.

The outer coating 78 is constructed from outer coating material 94. This outer coating material 94 may be a non-electrically conductive material. The outer coating material 88, for example, may be or otherwise include ceramic. Examples of the ceramic include, but are not limited to, yttria stabilized zirconia (YSZ) and gadolinium zirconate (GdZ). The outer coating material 94 of the present disclosure is not limited to non-electrically conductive materials. In other embodiments, for example, the outer coating material 94 may be an electrically conductive material; e.g., metal or metal based.

The outer coating 78 may be formed from a single layer of the outer coating material 94. The outer coating 78 may alternatively be formed from a plurality of layers of the outer coating material 94, where the outer coating material 94 within each of those outer coating layers may be the same as one another or different from one another. For example, the outer coating 78 may include a thin interior layer of the YSZ and a thicker exterior later of the GdZ.

Each of the cooling apertures 64 extends along a respective longitudinal centerline 96 between and to an inlet 98 of the respective cooling aperture 64 and an outlet 100 of the respective cooling aperture 64. The cooling aperture inlet 98 of FIG. 3 is located in the component first surface 68. The cooling aperture inlet 98 thereby fluidly couples its respective cooling aperture 64 with the cooling fluid volume 72 along the component first surface 68. The cooling aperture outlet 100 of FIG. 3 is located in the component second surface 70. The cooling aperture outlet 100 thereby fluidly couples its respective cooling aperture 64 with the core flowpath 54 along the component second surface 70.

Each of the cooling apertures 64 may include a meter section 102 and a diffuser section 104. The meter section 102 is disposed at (e.g., on, adjacent or proximate) the cooling aperture inlet 98. The meter section 102 is configured to meter (e.g., regulate) a flow of cooling fluid flowing from the cooling fluid volume 72, through the substrate material 84, to the diffuser section 104. The diffuser section 104 is disposed at the cooling aperture outlet 100. The diffuser section 104 is configured to diffuse the cooling fluid exhausted (e.g., directed out) from the cooling aperture outlet 100 into, for example, a film for cooling a downstream portion of the component second surface 70.

The meter section 102 of FIG. 3 extends longitudinally along the longitudinal centerline 96 within (e.g., partially into) the component substrate 74. More particularly, the meter section 102 extends longitudinally along a meter segment 106 of the longitudinal centerline 96 (e.g., a centerline of the meter section 102) from the cooling aperture inlet 98 to an outlet 108 of the meter section 102. The meter section outlet 108 of FIG. 3 is disposed vertically within the component substrate 74 intermediately between the component first surface 68 and the substrate second surface 82. The meter section outlet 108 of FIG. 3 is thereby vertically recessed into the component substrate 74 by a vertical distance 110 (e.g., along the z-axis).

The longitudinal centerline 96 and its (e.g., entire) meter segment 106 of FIG. 3 are angularly offset from the component first surface 68 by an included angle 112. This meter segment angle 112 may be an acute angle. The meter segment angle 112, for example, may be between ten degrees (10°) and eighty degrees (80°); e.g., between twenty degrees (20°) and thirty degrees (30°).

The meter section 102 has a longitudinal length 114 measured along the meter segment 106 between the cooling aperture inlet 98 and the meter section outlet 108. The meter section 102 has a lateral width 116 (e.g., diameter) measured along a line perpendicular to the meter section 102 of the longitudinal centerline 96. The meter section lateral width 116 may be different (e.g., smaller or larger) than or equal to the meter section longitudinal length 114.

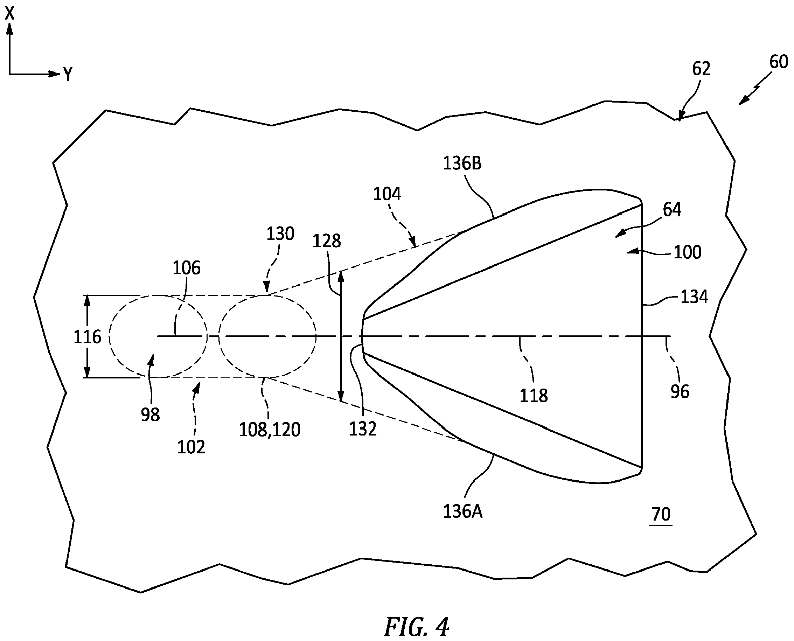

The meter section 102 has a cross-sectional geometry when viewed, for example, in a plane perpendicular to its meter segment 106 (or the x-y plane). This meter section cross-sectional geometry may be uniform along the longitudinal length 114 of the meter section 102. Referring to FIG. 4, the meter section cross-sectional geometry may be circular, oval, elliptical or otherwise annular in shape.

The diffuser section 104 of FIG. 3 extends longitudinally along the longitudinal centerline 96 out of the component substrate 74, through the inner coating 76 and the outer coating 78. More particularly, the diffuser section 104 of FIG. 3 extends longitudinally along a diffuser segment 118 of the longitudinal centerline 96 (e.g., a centerline of the diffuser section 104) from an inlet 120 of the diffuser section 104 (here, the same as the meter section outlet 108), through the materials 88 and 94 and into 84, to the cooling aperture outlet 100. The diffuser section inlet 120 of FIG. 3 is disposed vertically within the component substrate 74 intermediately between the component first surface 68 and the substrate second surface 82. The diffuser section inlet 120 of FIG. 3 is thereby vertically recessed into the component substrate 74 by the vertical distance 110 (e.g., along the z-axis).

The longitudinal centerline 96 and its (e.g., entire) diffuser segment 118 of FIG. 3 are angularly offset from the component second surface 70 by an included angle 122. This diffuser segment angle 122 may be an acute angle. The diffuser segment angle 122, for example, may be between twenty degrees (20°) and eighty degrees (80°); e.g., between thirty-five degrees (35°) and fifty-five degrees (55°). The diffuser segment angle 122 of FIG. 3 is different (e.g., less) than the meter segment angle 112. The diffuser segment 118 may thereby be angularly offset from the meter segment 106.

The diffuser section 104 has a longitudinal length 124 measured along the diffuser segment 118 between the diffuser section inlet 120 and the cooling aperture outlet 100. This diffuser section longitudinal length 124 may be equal to or different (e.g., less or greater) than the meter section longitudinal length 114. The diffuser section 104 has a lateral width 126, 128 (see FIG. 4) measured along a respective line perpendicular to the diffuser segment 118 of the longitudinal centerline 96. The diffuser section lateral width 126, 128 may be different (e.g., smaller or larger) than or equal to the diffuser section longitudinal length 124. The diffuser section lateral width 126, 128 of FIGS. 3 and 4 at the interface 130 between the diffuser section 104 and the meter section 102 is equal to the meter section lateral width 116. However, the diffuser section lateral width 126, 128 of FIGS. 3 and 4 at other locations along the longitudinal centerline 96 may be greater than meter section lateral width 116. More particularly, the diffuser section 104 laterally diverges as the diffuser section 104 projects longitudinally away from the meter section 102 towards or to the cooling aperture outlet 100.

The diffuser section 104 has a cross-sectional geometry when viewed, for example, in a plane perpendicular to its diffuser segment 118. This diffuser section cross-sectional geometry changes as the diffuser section 104 projects longitudinally away from the meter section 102, sequentially through the materials 84, 88 and 94 of FIG. 3, to the cooling aperture outlet 100.

Referring to FIG. 4, the cooling aperture outlet 100 may have a complex cross-sectional geometry when viewed, for example, a plane parallel with the component second surface 70 (e.g., the x-y plane). This outlet cross-sectional geometry may include a (e.g., curved or straight) leading edge section 132, a (e.g., curved or straight) trailing edge section 134 and opposing (e.g., curved or straight) sidewall sections 136A and 136B (generally referred to as "136"). Each of the sidewall sections 136 extends between and to respective ends of the leading and the trailing edge sections 132 and 134. A lateral width of the leading edge section 132 may be different (e.g., smaller) than a lateral width of the trailing edge section 134. The sidewall sections 136 may thereby generally laterally diverge away from one another as the sidewall sections 136 extend from the leading edge section 132 to the trailing edge section 134.

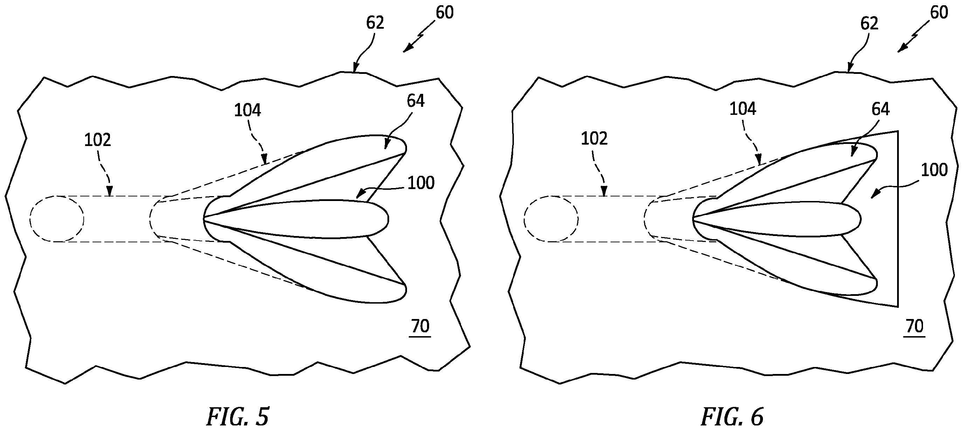

In some embodiments, referring to FIG. 4, the diffuser section 104 may be configured as a single lobe diffuser section. In other embodiments, referring to FIGS. 5 and 6, the diffuser section 104 may be configured as a multi-lobe diffuser section. Various other single lobe and multi-lobe diffuser sections for cooling apertures 64 are known in the art, and the present disclosure is not limited to any particular ones thereof. Further details on various multi-lobe diffuser sections can be found in U.S. Patent No. 9,598,979, which is assigned to the assignee of the present disclosure and hereby incorporated herein by reference in its entirety.

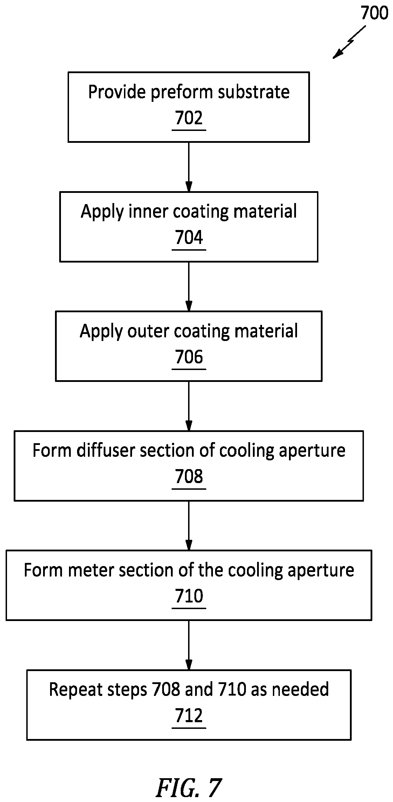

FIG. 7 is a flow diagram of a method 700 for manufacturing a fluid cooled component. For ease of description, the method 700 is described below with reference to the fluid cooled component 60 described above. The method 700 of the present disclosure, however, is not limited to manufacturing such an exemplary fluid cooled component.

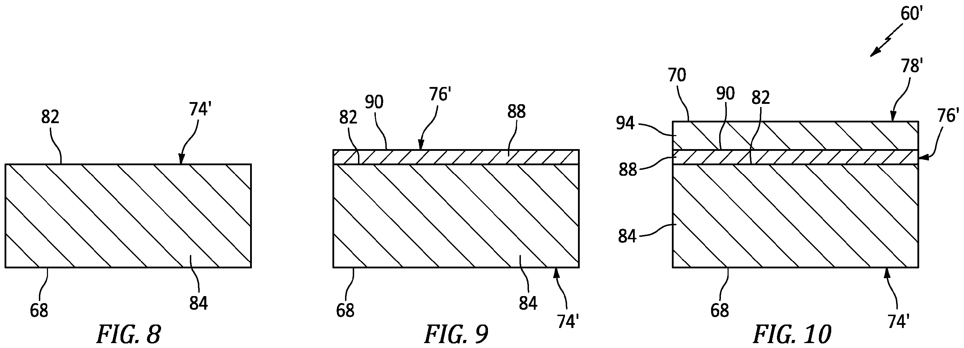

In step 702, a preform substrate 74' is provided. Referring to FIG. 8, the preform substrate 74' may generally have the configuration (e.g., shape, size, etc.) of the substrate for the fluid cooled component 60 (e.g., see FIG. 3) to be formed. The preform substrate 74' of FIG. 8, however, does not include any holes therein for forming the cooling apertures 64.

In step 704, a preform inner coating 76' is applied to the preform substrate 74'. For example, referring to FIG. 9, the inner coating material 88 may be applied (e.g., deposited) onto the second surface 82 of the preform substrate 74'. The inner coating material 88 may be applied using various different inner coating application techniques. Examples of the inner coating application techniques include, but are not limited to, a physical vapor deposition (PVD) process, chemical vapor deposition (CVD) process, a plating process, and a thermal spray process(e.g., a plasma spray (PS) process, a high velocity oxygen fuel (HVOF) process, high velocity air fuel (HVAF) process, a wire spray process or a combustion spray process). The inner coating application may be performed via a non-line-of-sight (NLOS) coating process or a direct-line-of-sight (DLOS) coating process. The preform inner coating 76' of FIG. 9 may generally have the configuration of the inner coating 76 for the fluid cooled component 60 (e.g., see FIG. 3) to be formed. The preform inner coating 76' of FIG. 9, however, does not include any holes for forming the cooling apertures 64.

In step 706, a preform outer coating 78' is applied to the preform inner coating 76'. For example, referring to FIG. 10, the outer coating material 94 may be applied (e.g., deposited) onto the second surface 90 of the preform inner coating 76'. The outer coating material 94 may be applied using various different outer coating application techniques. Examples of the outer coating application techniques include, but are not limited to, a physical vapor deposition (PVD) process (e.g., an electron-beam PVD process), chemical vapor deposition (CVD) process, a thermal spray process (e.g., a high velocity oxygen fuel (HVOF) process, a high velocity air fuel (HVAF) process), and a plasma spray (PS) process (e.g., an atmospheric PS process). The outer coating application may be performed via a non-line-of-sight (NLOS) coating process or a direct-line-of-sight (DLOS) coating process. The preform outer coating 78' of FIG. 10 may generally have the configuration of the outer coating 78 for the fluid cooled component 60 (e.g., see FIG. 3) to be formed. The preform outer coating 78' of FIG. 10, however, does not include any holes for forming the cooling apertures 64.

The combination of the preform substrate 74', the preform inner coating 76' and the preform outer coating 78' may provide a preform component 60'. This preform component 60' of FIG. 10 may generally have the configuration of the fluid cooled component 60 (e.g., see FIG. 3) to be formed. The preform component 60' of FIG. 10, however, does not include any holes for forming the cooling apertures 64.

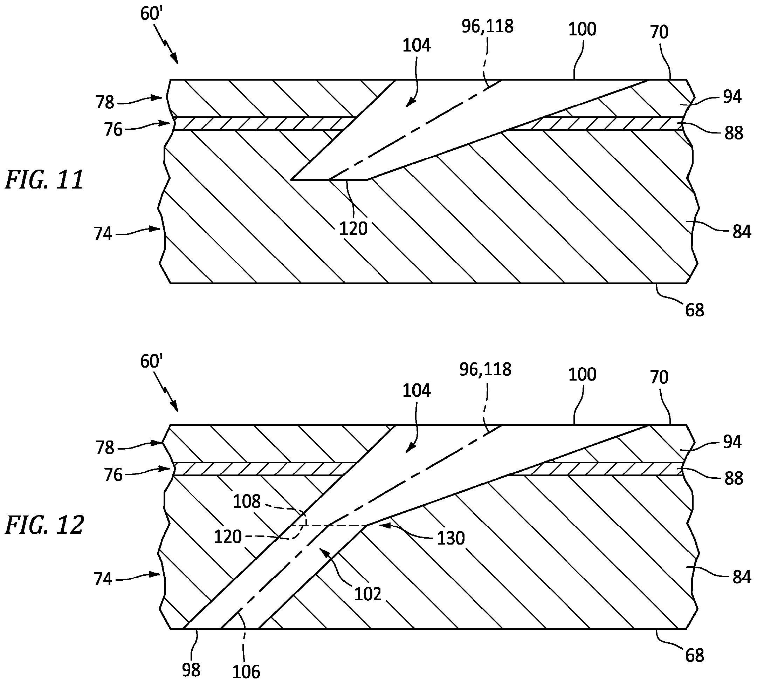

In step 708, the diffuser section 104 of a respective cooling aperture 64 (see FIG. 3) is formed in the preform component 60'. For example, referring to FIG. 11, a portion of the outer coating material 94, a portion of the inner coating material 88 and a portion of the underlying substrate material 84 is machined away (from the exterior of the preform component 60') to provide the respective diffuser section 104. The diffuser section 104 may be formed in the various materials of the preform component 60' using a diffuser section machining process. This diffuser section machining process is selected to form the diffuser section 104 in the various different electrically conductive and non-electrically conductive materials in the preform component 60'. The diffuser section machining process is also selected to provide the diffuser section 104 with a precise finish geometry. Examples of the diffuser section machining process include, but are not limited to, a laser machining (e.g., ablation) process, a water-jet guided laser (WJGL) machining process, an abrasive water jet (AWJ) machining process, an electron beam machining process, and a mechanical drilling process. Following this formation step 808, the respective diffuser section 104 may be fully formed in the preform component 60'.

In step 710, the meter section 102 of the respective cooling aperture 64 is formed in the preform component 60'. For example, referring to FIG. 12, a portion of the substrate material 84 is machined away (from the exterior of the preform component 60') to provide the respective meter section 102. The meter section 102 may be formed in the (e.g., electrically conductive, metal) substrate material 84 using a meter section machining process. This meter section machining process is selected to quickly, precisely and efficiently form the meter section 102 in the electrically conductive, metal substrate material 84. The meter section machining process, for example, may be an electrical discharge machining (EDM) process. While this EDM process may be particularly well suited for forming the meter section 102, such a process may not be feasible to implement for forming the diffuser section 104 using known EDM processing techniques because the diffuser section 104 extends through the non-electrically conductive outer coating material 94. Thus, the meter section machining process is different than the diffuser section machining process. Following this formation step 810, the respective meter section 102 may be fully formed in the preform component 60'. Thus, the respective cooling aperture 64 may be fully formed in the preform component 60'.

The transition between the different machining processes is performed at the interface 130 between the diffuser section 104 and the meter section 102. This may be done so as to improve alignment between the diffuser section 104 and the meter section 102. In particular, when two different machining processes are used to form different portions of the same aperture, one tool is moved away and another tool is positioned in its place. The swapping of the tools opens the manufacturing process up to slight misalignments due to, for example, tool manipulator tolerances. A misalignment somewhere along the complex (e.g., irregular) geometry of the diffuser section 104 may lead to flow disturbances close to the cooling aperture outlet 100. Furthermore, it may be more difficult to align complex shapes together than simple shapes (e.g., circles, ovals, etc.). Therefore, the transition between the different machining processes of steps 708 and 710 is performed at the interface 130 due to the relatively simple geometry of the cooling aperture 64 at that location.

In step 712, the formation steps 708 and 710 may be repeated one or more times to form other cooling apertures 64 in the preform component 60'. For example, the step 708 may be performed and repeated a number of times to form a plurality of diffuser sections 104 using the first machining tool. Following the formation of the diffuser sections 104, the step 710 may be performed and repeated a number of times to form a plurality of the meter sections 102 using the first machining tool. Following this step 712, the apertured preform component 60' may form the final fluid cooled component 60.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A manufacturing method, comprising:
providing a preform component (60') for a turbine engine (20), the preform component (60') including a substrate (74) and an outer coating (78) on the substrate (74), the substrate (74) comprising electrically conductive material, and the outer coating (78) comprising non-electrically conductive material; and
forming a cooling aperture (64) in the preform component (60'), the cooling aperture (64) including a diffuser section (104) and a meter section (102), the diffuser section (104) extending through the outer coating (78) and into the substrate (74), the meter section (102) extending within the substrate (74), and the forming of the cooling aperture (64) comprising
forming the diffuser section (104) using a first machining process; and
forming the meter section (102) using a second machining process that is different than the first machining process.

2. The manufacturing method of claim 1, wherein the first machining process comprises one of:
a laser machining process;
a water-jet guided laser machining process; and
an abrasive water jet machining process.

3. The manufacturing method of claims 1 or 2, wherein the second machining process comprises an electrical discharge machining process.

4. The manufacturing method of claims 1 to 3, wherein the providing of the preform component comprises:
providing the substrate; and
applying the outer coating over the substrate.

5. The manufacturing method of claim 4, wherein the preform component further includes an inner coating (76) between the substrate (74) and the outer coating (78), and the diffuser section (104) further extends through the inner coating (76).

6. The manufacturing method of claim 5, wherein the inner coating (76) comprises electrically conductive material that is different than the electrically conductive material of the substrate (74).

7. The manufacturing method of any preceding claim, wherein the cooling aperture (64) extends through the substrate (74) and the outer coating (78) along a centerline (96) and wherein:
the diffuser section (104) has a cross-sectional geometry that changes as the cooling aperture (64) extends along the centerline; and/or
the meter section (102) has a cross-sectional geometry that is uniform as the cooling aperture (64) extends along the centerline (96).

8. The manufacturing method of any preceding claim, wherein the diffuser section (104) is configured as a single lobed diffuser section (104).

9. The manufacturing method of any preceding claim, wherein the diffuser section (104) is configured as a multi-lobed diffuser section (104).

10. The manufacturing method of any preceding claim, wherein the preform component (60') comprises a preform (60') of an airfoil or a flowpath wall for the turbine engine (20).

11. The manufacturing method of any preceding claim, wherein the electrical conduct material comprises metal.

12. The manufacturing method of any preceding claim, wherein the non-electrically conductive material comprises ceramic.

13. A manufacturing method, comprising:
providing a substrate (74);
applying a coating over the substrate (74) to provide a preform component (60') for a turbine engine (20);
forming a diffuser section (104) of a cooling aperture (64) in the preform component (60') using a first machining process, the diffuser section (104) extending through the coating and into the substrate (74); and
forming a meter section (102) of the cooling aperture (64) in the preform component (60') using a second machining process that is different than the first machining process, the meter section (102) extending within the substrate (74) to the diffuser section (104): and
wherein, optionally, the substrate is configured from metal and the coating is configured from ceramic.

14. The manufacturing method of claim 13, wherein
the first machining process comprises a laser machining process; and
the second machining process comprises an electrical discharge machining process.

15. A manufacturing method, comprising:
providing a substrate (74), the substrate (74) comprising metal;
applying a coating over the substrate (74) to provide a preform component (60') for a turbine engine (20);
forming a first section of a cooling aperture (64) in the preform component (60') using a laser machining process, the first section extending through the coating and into the substrate (74); and
forming a second section of the cooling aperture (64) in the preform component (60') using an electrical discharge machining process, the second section extending within the substrate (74).
